(19) Europäisches Patentamt

European Patent Office

Office européen des brevets

(11) Publication number : **0 480 625 A2**

# (12) EUROPEAN PATENT APPLICATION

(21) Application number : **91309032.0**

(22) Date of filing : **02.10.91**

(51) Int. Cl.⁵ : **G06F 15/72**

(30) Priority : **08.10.90 US 600567**

(43) Date of publication of application :
**15.04.92 Bulletin 92/16**

(84) Designated Contracting States :
**DE FR GB NL**

(71) Applicant : **DUBNER COMPUTER SYSTEMS INC.**
**6 Forest Avenue**
**Paramus New Jersey 07652-5214 (US)**

(72) Inventor : **Rossi, Gerald C.**
**431 Beverley Road**
**Richwood, New Jersey 07450 (US)**

(74) Representative : **Molyneaux, Martyn William et al**
**c/o Ladas & Parry, Altheimer Eck 2**
**W-8000 München 2 (DE)**

(54) **Method and apparatus for generating a sequence of images representing a motion picture.**

⑦   A metbod of creating a sequence of M output images from a sequence of N input images each composed of tbree component images corresponding to respective mutually orthogonal axes that define a color space comprises initializing a variable (CumTot) to zero, then generating a component image of an output image for each of the three orthogonal axes. This is accomplished by mixing the component image of the nth input image (where n is equal to the integer part of the variable) with the component image of the (n + 1)th input image in accordance with a blend fraction (Alpha) equal to the fractional part of the variable. The variable is incremented by the fraction (N/M), and the step of mixing and incrementing is repeated (M - 1) times.

EP 0 480 625 A2

## Background of the Invention

This invention relates to a method and apparatus for generating a sequence of images representing a motion picture.

Much of the following discussion of video images is presented in the context of the NTSC system, in which the frame rate is 30 frames per second. However, the principles involved are applicable to other frame rates also.

A video motion picture is created by displaying multiple still images at a rate of 30 images per second so that the different still images are not distinguished by the human eye but are merged into a scene that appears to contain continuous motion. Frequently, the sequence of still images is created by use of a camera that acquires images of a real life scene at a rate of 30 images per second and uses those images to generate a video signal. The video signal is used to drive a monitor or receiver, which displays the images at the same rate. In this case, the images will generally represent movement in the scene with a high degree of accuracy because the images are displayed at the same rate as they are acquired. Accordingly, if movement in the scene is smooth, the movement that is depicted by display of the sequence of images also is smooth. Sometimes, however, the number of images that are available is insufficient to create the desired impression of smooth, continuous movement. This happens in cartoon animations, because it is expensive to create the interviewing images. In this case, the images might depict the scene at intervals of 1/15 of a second and each image is shown twice in order to provide 30 images per second.

It is sometimes desirable to display an animation in a time interval that is different from that for which it was created. For example, it might be desired to show a sequence of 300 images, which would normally occupy 10 seconds, in an 11 second interval, which requires 330 images. It is inconvenient and expensive to create all the new images that would be needed in order to stretch the animation by one second.

Under some circumstances, the images necessary to provide a smooth animation are not available. This typically occurs when the images depict a natural process, such as satellite pictures showing cloud cover.

It is conventional to create additional "in-between" frames by spatial interpolation between the frames that are available. For example, in a sequence of images showing a ball moving horizontally across a background, if one frame shows the ball just to the left of the center of the background and the next frame shows the ball just to the right of the center of the background, an in-between frame might show the ball precisely at the center of the background.

The video effects that can be accomplished using a conventional production switcher include the effect known as dissolve. In a dissolve, two video sequences, each composed of color frames occurring at a rate of 30 frames per second, are applied to a mixer that interpolates between the two sequences in a color space. For example, the mixer might receive two input frames 1 and 2 of respective synchronous input sequences and generate an output frame O such that the red component of pixel i,j ($0 <= i <$ lines in frame and $0 <= j <$ columns in frame) in the output frame is given by the following equation:

$$RedO = alpha * Red2 + (1 - alpha) * Red1$$

where

Red1 = red component of pixel i,j in input frame 1
Red2 = red component of pixel i,j in input frame 2
RedO = red component of pixel i,j in output frame O
alpha = blend fraction

for all i,j pixels. This is done for the green and blue color components also and the three component output frames may then be combined to provide a color frame.

The value of the blend fraction alpha ranges from zero to one as the operator moves a manual control, typically a lever arm, through an angular range.

## Summary of the Invention

It has been found that in certain animation applications, interpolation between images on the basis of color provides a smooth and pleasing visual result, without need for spatial interpolation.

In accordance with a first aspect of the invention, a method of creating a sequence of M output images from a sequence of N input images each composed of three component images corresponding to respective mutually orthogonal axes that define a color space comprises initializing a variable to zero, generating a component image of an output image for each of the three orthogonal axes by mixing the component image of the nth input image (where n is equal to the integer part of the variable) with the component image of the (n + 1)th input image in accordance with a blend fraction equal to the fractional part of the variable, and incrementing the variable by the fraction (N/M), and repeating the generating step (M - 1) times.

In accordance with a second aspect of the present invention, a method of creating an image representative of a scene at a time t from a first image of that scene at time T1 (less than t) and a second image of that scene at time T2 (greater than t), comprises creating three component images of the first image along respective mutually orthogonal axes that define a color space, creating three component images of the second image along the same axes as the component images of the first image, and for each of the three axes, generating a component image by blending the component image of the first image with the component image of the second image employing a blend fraction equal to t/(T2 - T1).

In accordance with a third aspect of the present invention, apparatus for creating a sequence of M output images from a sequence of N input images each composed of three component images corresponding to respective mutually orthogonal axes that define a color space, comprises means for storing the N input images, means for storing a variable, means for initializing said variable to zero, means for mixing each of the three component images of the qth input image, where q is one plus the integer part of said variable, with the corresponding component image of the (q + 1)th input image using a blend fraction equal to the fractional part of said variable, so as to generate three component images of an output image, and means for incrementing said variable by (N/M).

## Brief Description of Drawing

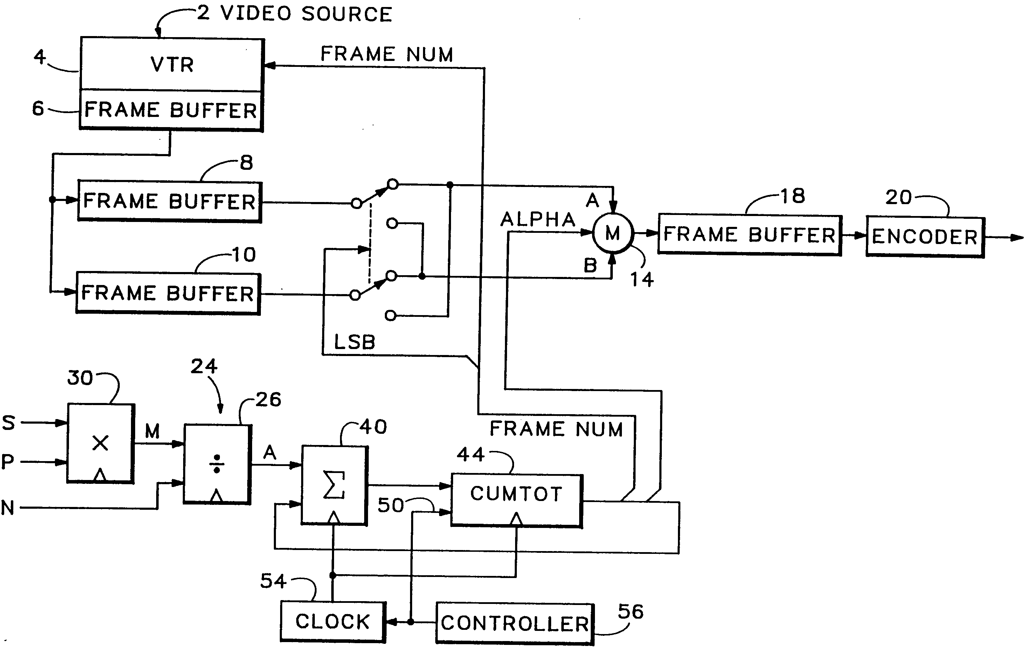

For a better understanding of the invention, and to show how the same may be carried into effect, reference will now be made, by way of example, to the accompanying drawing, the single figure of which is a block diagram of apparatus for creating a sequence of M output images from a sequence of N input images.

## Detailed Description

The apparatus shown in the figure comprises a video source 2 having stored therein a sequence of N video frames identified as frames 0 . . . (N - 1). The video source might be, for example, a video tape recorder 4 having an output frame buffer 6. The apparatus also comprises first and second frame buffers 8 and 10, each of which is capable of storing a single video frame. Video source 2 receives a command FrameNum representing a number n (0 < = n < = (N - 1)). Video source 2 responds to FrameNum = 0 by loading frames 0, 1 and 2 into frame buffers 8, 10 and 6 respectively. Subsequently, video source 2 responds to a command FrameNum = n (>0) by shifting frame (n + 1) from frame buffer 6 to whichever of frame buffers 8 and 10 previously contained frame (n - 1) and loading frame (n + 2), if n < (N - 2), into frame buffer 6.

Frame buffers 8 and 10 have respective outputs connected through a double-pole, double-throw switch 12 to video inputs A and B of a video mixer 14, which also receives a signal representing a blend fraction Alpha and provides an output signal

$$Alpha*A + (1 - Alpha)*B$$

to an output frame buffer 18. Frame buffers 8, 10 and 18 each have three planes, for red, green and blue color component signals respectively, and mixer 14 is composed of three color component mixers associated with the red, green and blue planes respectively of the frame buffers. For the red color component, for example, mixer 14 blends the red component value for pixel i,j in frame buffer 8 with the red component value for pixel i,j in frame buffer 10 to generate the red component value for pixel i,j to be loaded into frame buffer 18.

Frame buffer 18 has an output that is connected to a video encoder 20, which takes the red, green and blue component signals stored in frame buffer 18 and combines them to produce a single-valued output video signal. Alternatively, encoder 20 may be connected directly to the output of mixer 14.

The least significant bit of the FrameNum command is used to control the state of switch 12. If the LSB of FrameNum is zero, switch 12 connects frame buffers 8, 10 to the inputs A, B respectively of mixer 14, and if the LSB is one, switch 12 reverses these connections.

The blend fraction applied to mixer 14 and the FrameNum command applied to video source 2 are generated by a state machine 24. State machine 24 includes a divider 26 having inputs at which it receives signals representing the number N of input frames that are available and the number M of output frames that are desired. The number M might be calculated by a multiplier 30 from the desired duration S of the output sequence and the rate P at which output frames must be provided in order to achieve smooth animation. The values of M and N are applied to a divider 34, which provides as its output an animation fraction A equal to N/M. The output of divider 34 is applied to one input of an adder 40, which has another input connected to the output of a register 44. The output of adder 40 is connected to the input of register 44.

Register 44 contains a number CumTot, whose integer part is FrameNum and is applied to video source 2. The fractional part of the number CumTot is the blend fraction Alpha that is applied to the mix control input of mixer 14. Register 44 has an initialization input 50 by which the number zero can be loaded into the register 44.

The state machine includes a clock 54, which operates the state machine 24 at a frequency equal to the desired frame rate at the output of frame buffer 18. In response to an initialization signal from a system controller 56, clock 54 generates a sequence of clock pulses 0 . . . (M - 1).

In operation, controller 56 initializes the state machine, whereby zero is loaded into register 44 and clock 54 starts. Therefore, on occurrence of clock pulse 0, CumTot is equal to zero. Consequently FrameNum(0), i.e., the value of FrameNum generated in response to clock pulse 0, also is zero, and frames 0 and 1 of the sequence of N frames are loaded into frame buffers 8 and 10 respectively and frame 2 is loaded into frame buffer 6. Since the LSB of FrameNum(0) is zero, switch 12 connects the outputs of frame buffers 8, 10 to the inputs A,B of mixer 14.

The fractional part of the number stored in register 44, i.e., zero, is applied to the mix control input of mixer 14. Consequently, for CumTot equal to zero, the output of mixer 14 contains all of frame 0 and none of frame 1, and is loaded into frame buffer 18. Clock 54 then generates clock pulse 1, and in response thereto adder 40 sums its inputs and loads the result

$$CumTot(1) = CumTot(0) + A$$

back into register 44. Assuming that M is greater than N, so that A is less than one, FrameNum(1) is equal to zero and Alpha is equal to A. The LSB of FrameNum(1) is zero and therefore the state of switch 12 is unchanged.

If $0.5 < A < 1$, CumTot(2) is greater than 1 and FrameNum(2) is 1. In this case, the LSB of FrameNum(2) is one and switch 12 transfers to the state in which it connects the outputs of frame buffers 8 and 10 to the B and A inputs respectively of mixer 14. Frame 2 is loaded into frame buffer 8, replacing frame 0, and mixer 14 blends Frame 2 and Frame 1. Switch 12 thus ensures that the output of the frame buffer containing the lower number frame is always connected to input A of mixer 14 and the other frame buffer is connected to input B.

M cycles of the operation are executed, generating M output frames in an interval of S seconds. The following table shows the results for the case in which M is equal to 25 and N is equal to 20, so that A is equal to 0.8.

TABLE

| Clock Pulse | CumTot | FrameNum | Alpha | CumTot plus A |
|---|---|---|---|---|
| 0 | 0 | 0 | 0.0 | 0.8 |
| 1 | 0.8 | 0 | 0.8 | 1.6 |
| 2 | 1.6 | 1 | 0.6 | 2.4 |
| 3 | 2.4 | 2 | 0.4 | 3.2 |
| 4 | 3.2 | 3 | 0.2 | 4 |
| 5 | 4 | 4 | 0.0 | 4.8 |
| 6 | 4.8 | 4 | 0.8 | 5.6 |
| 7 | 5.6 | 5 | 0.6 | 6.4 |
| 8 | 6.4 | 6 | 0.4 | 7.2 |
| 9 | 7.2 | 7 | 0.2 | 8 |
| 10 | 8 | 8 | 0.0 | 8.8 |
| 11 | 8.8 | 8 | 0.8 | 9.6 |
| 12 | 9.6 | 9 | 0.6 | 10.4 |
| 13 | 10.4 | 10 | 0.4 | 11.2 |
| 14 | 11.2 | 11 | 0.2 | 12 |
| 15 | 12 | 12 | 0.0 | 12.8 |
| 16 | 12.8 | 12 | 0.8 | 13.6 |
| 17 | 13.6 | 13 | 0.6 | 14.4 |
| 18 | 14.4 | 14 | 0.4 | 15.2 |
| 19 | 15.2 | 15 | 0.2 | 16 |
| 20 | 16 | 16 | 0.0 | 16.8 |
| 21 | 16.8 | 16 | 0.8 | 17.6 |
| 22 | 17.6 | 17 | 0.6 | 18.4 |
| 23 | 18.4 | 18 | 0.4 | 19.2 |
| 24 | 19.2 | 19 | 0.2 | 20 |

The command indicating the duration of the sequence, and thus the number of output frames required, Can be issued at the start of playback or it may be varied dynamically during playback. For example, the playback duration may depend on the time taken for an operator to move a lever arm through an angular range, in which case an angle encoder can generate a signal representative of the instantaneous angular position of the lever arm, and this signal can be used to generate the time S that will be taken to complete movement through the angular range. As the lever arm is moved, the value of S is repeatedly recalculated.

It is conventional to use a key control signal to control combination of a key fill video signal with a background signal. A key control signal is similar to a video signal, but represents opacity of the key fill frame as a function of position. In the video signal that results from combining the key fill video signal with the background signal, the key fill image is present at points for which the key control signal is one, the background image is present at points for which the key control signal is zero, and a proportional mix of the key fill image and the background image is present at points for which the key control signal is between zero and one. In the event that the output video signal of mixer 14 is to be used to form a key fill video signal that will be combined with a background signal or another key fill video signal, and consequently the video frames stored in video source 2 have key control frames associated therewith, the key control frames are treated similarly to the color component frames. Thus, frame buffers 8, 10 and 18 each have a key control plane and mixer 14 includes a key control mixer that mixes successive input key control frames under control of the blend fraction Alpha to generate an output key control frame. The key control signal derived from the sequence of output key control frames is used to control combination of the output video signal of mixer 14 with another video signal.

It will be appreciated that the invention is not restricted to the particular embodiment that has been described, and that variations may be made therein without departing from the scope of the invention as defined in the appended claims and equivalents thereof. For example, although the invention has been described with reference to the red, green and blue axes of the color space, colors may be resolved along other orthogonal color axes or along the luminance and chrominance axes. Furthermore, and particularly with reference to television standards that prescribe interlaced scanning, the invention may be carried out on a field by field basis instead of a frame by frame basis, in which case it may be desirable to interpolate between alternate fields instead of consecutive fields. The invention may also be applied to standards conversion between, for example, a signal in accordance with the PAL standard and a signal in accordance with the NTSC standard. The invention is not limited to the case in which the animation fraction A is less than one, since in some cases it may be desirable to compress a sequence of frames into a time less than the number of frames divided by the frame rate.

## Claims

1. A method of creating a sequence of M output images from a sequence of N input images each composed of three component images corresponding to respective mutually orthogonal axes that define a color space, said method comprising:
   (a) initializing a variable (CumTot) to zero,
   (b) (i) generating a component image of an output image for each of the three orthogonal axes by mixing the component image of the nth input image (where n is equal to the integer part of the variable) with the component image of the (n + 1)th input image in accordance with a blend fraction (Alpha) equal to the fractional part of the variable, and (ii) incrementing the variable by the fraction (N/M), and
   (c) repeating step (b) (M - 1) times.

2. A method according to claim 1, wherein the value of the fraction (N/M) remains constant.

3. A method according to claim 1, comprising altering the value of (N/M) after the first iteration of step (b) and before the Mth iteration of step (b), and employing the altered value of the fraction (N/M) in subsequent iterations of step (b).

4. A method according to claim 1, wherein step (b) comprises combining the three component images of the output image.

5. A method of creating a sequence of output images at a rate of P images per unit time, starting at time zero and ending at time S, where S is an integer multiple of 1/P, from a sequence of N input images each composed of three component images corresponding to respective mutually orthogonal axes that define a color space, said method comprising:
   (a) computing an animation fraction equal to N/ (P∗S),
   (b) initializing a variable (CumTot) to zero,
   (c) (i) generating a component image of an output image for each of the three orthogonal axes by mixing the component image of the nth input image (where n is equal to the integer part of the variable) with the component image of the (n + 1)th input image in accordance with a blend fraction equal to the fractional part of the variable, and (ii) incrementing the variable by the animation fraction, and
   (d) repeating step (c) ((P∗S) - 1) times.

6. A method according to claim 5, wherein the value of the fraction N/(P∗S) remains constant.

7. A method according to claim 5, comprising altering the value of N/(P∗S) after the first iteration of step (c) and before the (P∗S)th iteration of step (c), and employing the altered value of the fraction N/(P∗S) in subsequent iterations of step (c).

8. A method according to claim 5, wherein step (c) comprises combining the three component images of the output image.

9. A method of creating an image representative of a scene at a time t from a first image of that scene at time T1 (less than t) and a second image of that scene at time T2 (greater than t), comprising:

(a) creating three component images of the first image along respective mutually orthogonal axes that define a color space,

(b) creating three component images of the second image along the same axes as the component images of the first image, and

(c) for each of the three axes, generating a component image by blending the component image of the first image with the component image of the second image employing a blend fraction equal to $t/(T2 - T1)$.

10. A method according to claim 9, comprising combining the three component images generated in step (c) to synthesize a third image representative of said scene at time t.

11. Apparatus for creating a sequence of M output images from a sequence of N input images each composed of three component images corresponding to respective mutually orthogonal axes that define a color space, the apparatus comprising:

means (2) for storing the N input images,

means (44) for storing a variable (CumTot),

means (50) for initializing said variable (CumTot) to zero,

means (14) for mixing each of the three component images of the qth input image, where q is one plus the integer part of the variable (CumTot), with the corresponding component image of the (q + 1)th input image in accordance with a blend fraction equal to the fractional part of said variable (CumTot), so as to generate three component images of an output image, and

means (40) for incrementing said variable (CumTot) by (N/M).

2 VIDEO SOURCE

4 — VTR

6 — FRAME BUFFER

FRAME NUM

8 — FRAME BUFFER

10 — FRAME BUFFER

LSB

ALPHA

A
M
B
14

18 — FRAME BUFFER

20 — ENCODER

30 — ×

24 — ÷
26

40 — Σ

44 — CUMTOT

50

FRAME NUM

S
P
N
M
A

54 — CLOCK

56 — CONTROLLER

EP 0 480 625 A2